# EUROPEAN PATENT APPLICATION

(11) **EP 4 470 404 A1**
(43) Date of publication of application: **04.12.2024**
(21) Application number: 23176953.0
(22) Date of filing: 02.06.2023
(51) Int. Cl.: A41D 13/018

(54) **AN INFLATOR ARRANGEMENT, A SYSTEM FOR A WEARABLE SAFETY ARRANGEMENT COMPRISING SUCH INFLATOR ARRANGEMENT, AND THE USE OF SUCH INFLATOR ARRANGEMENT**

(71) Applicant: Autoliv Development AB, 447 83 Vårgårda (SE)
(72) Inventor: Ramberg, Ludvig, 447 83 Vårgårda (SE); Meng, Shiyang, 447 83 Vårgårda (SE); Mucchiano-Ahlstrom, Alexander, 447 83 Vårgårda (SE); Sundberg, Pontus, Vårgårda, 447 83 (SE); Jonsson, Martin, Vårgårda, 447 83 (SE)
(74) Representative: AWA Sweden AB

(57) **Abstract**

An inflator arrangement is provided. The inflator arrangement comprises a gas canister (100; 100') holding a volume of pressurized gas. The gas canister has a first end being sealed by a membrane (102; 102'). The arrangement further comprises a gas actuator (400; 400') configured to break the membrane to thereby release the gas from the gas canister; and a valve arrangement (200; 200') comprising a valve chamber (201; 201') configured to receive the gas released from the gas canister, a piston (202; 202') being movably received in said valve chamber, and a piston actuator (500; 500'). The piston actuator is configured to selectively move the piston from a default position allowing the received gas to be released from the valve arrangement via a first outlet (205; 205') of the valve chamber, to an alternative position allowing the received gas to be released from the valve arrangement via a second outlet (206; 206') of the valve chamber. Further, a system for a wearable safety arrangement using such inflator arrangement is provided. Additionally, a method of sensing abnormal movement by using a system for wearable safety arrangement which comprises such an inflator arrangement is provided.

## Description

### Technical field

The present invention relates to an inflator arrangement for selective inflation of two or more airbags, a system for a wearable safety arrangement where the system comprises such inflator arrangement, and to the use of such inflator arrangement in a wearable safety system.

### Technical background

It is well known in the art to provide wearable safety systems where one or more airbags are integrated in the system. Non-limiting examples are backpacks, motorcycle rider suits or vests and different types of harnesses. The safety systems may by way of example be directed to be used by bikers or motorcyclists, for sport activities, for working safety or for the provision of improved life quality for elder or disabled persons. The one or more airbags are configured to be inflated by one or more inflators. This is a challenge since the users require high comfort. Hence, minimizing both weight and overall size is a challenge, not only in view the inflator as such but also for the overall wearable system. Further, many wearable airbags need a very high pressure. As a non-restricting example, some motorcycle vests on the market are designed to provide an inflated pressure far above 100 kPa. These levels in combination with large volumes require large inflators. There is also a trend towards the provision of several airbags in one and the same product. This may be used to provide a head-to-toe protection. It may also be used to allow a protection to a specific area of the wearers body based on the type of accident. There is hence a need for a wearable safety system with two or more airbags that allows a reduced weight and bulkiness, while still allowing the generation of high pressures and large gas volumes.

### Summary of the invention

It is an object of the present invention to solve at least some of the problems mentioned above.

According to an aspect of the present invention, there is provided an inflator arrangement for selective inflation of two or more airbags, the inflator arrangement comprising:
a gas canister holding a volume of pressurized gas, the gas canister having a first end being sealed by a membrane;
a gas actuator configured to break the membrane to thereby release the gas from the gas canister; and
a valve arrangement comprising a valve chamber configured to receive the gas released from the gas canister, a piston being movably received in said valve chamber, and a piston actuator; wherein
the piston actuator is configured to selectively move the piston from a default position allowing the received gas to be released from the valve arrangement via a first outlet of the valve chamber, to an alternative position allowing the received gas to be released from the valve arrangement via a second outlet of the valve chamber.

Accordingly, an inflator arrangement is provided where a valve chamber of a valve arrangement is configured to receive gas from a gas canister by the breaking of a sealing member. The valve chamber contains a piston that can be set by a piston actuator from a default position to an alternative position. Gas that is received into the valve chamber when the piston is set to its default position will be released from the valve arrangement via the first outlet of the valve chamber. Correspondingly, gas that is received into the valve chamber when the piston is set to its alternative position will be released from the valve arrangement via the second outlet of the valve chamber. As a practical example, depending on the setting of the piston, the inflator arrangement may be used to inflate either a first airbag to be connected to the first outlet, or a second airbag to be connected to the second outlet. The piston is set by activating the piston actuator.

To provide a non-limiting example of a practical application of the use of such inflator arrangement, the arrangement may be used in a safety harness that comprises a first airbag that is configured to provide a protection of the wearers neck and/or head and a second airbag that is configured to provide a protection of the wearer's hips. The piston actuator may be operated to set the piston from the default position to the alternative position upon an activation of the gas actuator to thereby allow an inflation of the airbag that is best suited to remedy a certain type of accident. The gas actuator and the piston actuator may be configured to be activated simultaneously, or in a sequence.

The first outlet of the valve chamber may be configured to be directly or indirectly connected to a first airbag, and the second outlet of the valve chamber may be configured to be directly or indirectly connected to a second airbag. A *"direct connection"* is to be understood as that an inlet of an airbag is directly connected to the outlet of the valve chamber. An *"indirect connection"* is to be understood as the provision of a gas transfer arrangement, e.g. a hose or the like, that is connected between an outlet of the valve chamber and an inlet of the airbag. Hence, an indirect connection allows the inflator arrangement to be arranged remote from the airbags.

The first end of the gas canister may be connected to a gas distributing housing, said gas distributing housing comprising a tubular envelope wall comprising at least one throughgoing opening communicating with the valve chamber of the valve arrangement, thereby allowing gas released from the gas canister to be guided into the valve chamber.

The at least one throughgoing opening may be one or more substantially circular holes or one or more elongated grooves being formed in an envelope wall portion of the gas distributing housing.

In the event of two or more throughgoing openings, these may be distributed along the circumference of the gas distributing housing.

The at least one throughgoing opening will allow the gas to be guided into the valve chamber in a direction substantially transverse to a longitudinal extension of the gas distributing housing.

The gas actuator may at least partly be arranged in the gas distributing housing. The gas actuator may comprise a gas generator and a slider, the slider being movable supported by a tubular envelope wall of the gas distributing housing. A leading end of the slider may comprise a cutter configured to break the membrane.

The gas generator may be stationary arranged in the gas distributing housing and face a trailing end of the slider. Thereby, gas that is generated by the gas generator upon an activation thereof will fill a void between the gas generator and the trailing end of the slider and force the slider in a direction towards the membrane. As the leading end of the slider comes into contact with the membrane, the cutter of the slider will break the membrane and allow the gas that is contained in the gas canister to be released through the resulting cut opening in the membrane. The thus released gas will be guided via the gas distributing housing into the valve chamber.

The gas actuator may be linearly aligned with a longitudinal extension of the gas canister.

The gas actuator and/or the piston actuator may be a pyrotechnically or electrically activated actuator. The gas actuator and the piston actuator may be of the same type or be of different types. Pyrotechnically or electrically activated actuators are as such well known in the field of inflators for safety applications. Hence, no further explanations are provided.

The valve chamber may in one embodiment of the inflator arrangement have a longitudinal extension in parallel with a longitudinal centreline of the gas canister. The piston may be movably received in said valve chamber along and in parallel with the longitudinal centreline of the valve chamber.

The inflator arrangement may in one embodiment of the inflator arrangement comprise at least two valve arrangements, said at least two valve arrangements being circumferentially distributed about a longitudinal centreline of the gas chamber, and each valve chamber having a longitudinal extension in parallel with a longitudinal centreline of the gas canister.

The two or more valve arrangements may be arranged so that the longitudinal centrelines of the respective valve arrangements are arranged in a common plane. Further, the two or more valve arrangements may be arranged so that the longitudinal centrelines of the respective valve arrangements and the longitudinal centerline of the gas canister are arranged in a common plane. This allows the provision of a substantially flat, and hence less spacy, over-all structure of the inflator arrangement. This is of special interest when the inflator arrangement is configured to be part of a wearable safety system.

The two or more valve arrangements are arranged in fluid communication with a respective throughgoing opening in the tubular envelope wall of the gas distributing housing. Thereby gas is allowed to be released from the gas canister and be guided into the valve chambers of the two or more valve arrangements.

As a practical example, by providing two valve arrangements, up to four airbags may be inflated by the use of one single gas canister. One of the two valve arrangements may be arranged to inflate one airbag in a first set of two airbags, and the other of the two valve arrangements may be arranged to inflate one airbag in a first set of two airbags.

The valve chamber may in one embodiment of the inflator arrangement have a longitudinal extension extending coaxially with and outside the gas canister. This allows the provision of a substantially tubular, and hence less spacy, over-all structure of the inflator arrangement. This is of special interest when the inflator arrangement is configured to be part of a wearable safety system.

The gas actuator may be arranged in one end portion of the inflator arrangement and the piston actuator may be arranged in a second end portion of the inflator arrangement, opposite the first end portion.

The gas actuator and the piston actuator may, upon an activation, be configured to generate a respective actuating force having opposite directions. This applies no matter if the actuating force is generated by a pyrotechnically or by an electrically activated actuator.

The first outlet of the valve chamber is arranged in the end portion closest to the gas actuator and the second outlet of the valve chamber is arranged in the end portion closest to the piston actuator.

The piston may be movably received in said valve chamber in an interface between an outer envelope wall of the gas canister and an inner envelope wall of the valve chamber. Hence, the piston is coaxially movable along the longitudinal extension of the gas canister.

The outer envelope wall of the piston may fit snuggly with the inner envelope wall of the valve chamber.

A longitudinally extending passage is formed in the interface between the outer envelope wall of the gas canister and the inner envelope wall of the piston.

The piston comprises a first wall portion that seals-off the second outlet of the valve chamber in a condition when the piston is set to its default position. Correspondingly, the piston comprises a second wall portion that seals-off the first outlet of the valve chamber in a condition when the piston is set to its alternative position.

The piston may have a tubular shape.

The piston may be configured to be moved by a driver as the piston actuator is activated. The driver may be integrated with the piston or be integrated with the piston actuator. The driver may by way of example be formed as a finger-like protrusion or as a member providing a circumferential abutment surface. Said protrusion or abutment surface is configured to engage a free end of the piston to move the same.

According to another aspect, the invention refers to a system for a wearable safety arrangement. The system comprises an inflator arrangement according to any of claims 1-11, wherein the first outlet of the valve chamber is connected to a first airbag and the second outlet of the valve chamber is connected to a second airbag, the system further comprising:
a detector configured to sense an abnormal movement of a user of the system and to generate movement data; and
an ECU configured to communicate with the detector to determine if the movement data represents a first type accident or a second type accident; and
wherein, in the event it is determined that the movement data represents a first type accident, the ECU is configured to generate a first activation signal to activate the gas actuator to thereby allow the gas released from the gas canister to inflate the first airbag; and
in the event it is determined that the movement data represents a second type accident, the ECU is configured to generate a first activation signal to activate the gas actuator to thereby release the gas from the gas canister, and also to generate a second activation signal to activate the piston actuator to thereby allow the released gas to inflate the second airbag.

In the context of the invention, *"a first type accident"* is to be understood as an accident that may be remedied by an inflation of a first airbag. Correspondingly, a *"second type accident"* is to be understood as an accident that may be remedied by an inflation of a second airbag.

As a non-limiting example, a first type accident may by way of example be that it is determined that the wearer's body is suddenly and abnormally falling to the right, whereby a first airbag is to be inflated that will be deployed to extend across the right hip of the wearer and hence protect the right-hand side of the wearer's body. Correspondingly, a second type accident may by way of example be that it is determined that the wearer's body is suddenly and abnormally falling to the left, whereby a second airbag is to be inflated that will be deployed to extend across the left hip of the wearer, and hence protect the left-hand side of the wearers body. The two airbags may be part of a harness to be worn on the wearer's torso.

As another non-limiting example, a first type accident may be that it is determined that the wearers body is suddenly falling in such direction that the wearer's head needs to be protected, whereby a first airbag is to be inflated that will be deployed to extend across the head of the wearer and hence protect the wearer's skull and/or face. Correspondingly, a second type accident may by way of example be that it is determined that the wearer's body is suddenly and abnormally falling in such direction that the wearer's hips should be protected, whereby a second airbag is to be inflated that will be deployed to extend across the hips of the wearer, and hence protect the lower part of the wearer's body. The two airbags may be part of a harness of a backpack.

The detector may by way of example be an accelerometer and/or gyroscope.

The ECU may be configured to, in the event that the ECU determines that the movement data represents a second type accident, generate the first and second activation signals in a sequence so that the piston is moved to the alternative position simultaneously with, or before the gas actuator is activated to break the membrane, whereby the released gas will inflate the second airbag. This may allow a slightly faster inflation of the second airbag.

According to another aspect, a method of sensing abnormal movement by using a system for wearable safety arrangement which comprises an inflator arrangement according to any of claims 1-11 is provided. The method comprises the steps of:
sensing, by using a detector, the movement of the user and generating movement data;
communicating the movement data to the ECU;.
determining by using the ECU if the movement data represents a first type accident or a second type accident; and
in the event it is determined that the movement data represents a first type accident, generating, by using the ECU, a first activation signal to activate the gas actuator to thereby allow the gas released from the gas canister to inflate the first airbag; and
in the event it is determined that the movement data represents a second type accident, generating, by using the ECU, a first activation signal to activate the gas actuator to thereby release the gas from the gas canister, and also to generate a second activation signal to activate the piston actuator to thereby allow the released gas to inflate the second airbag.

According to yet another aspect, the invention refers to the use of the inflator arrangement according to any of claims 1-11 in a wearable safety system.

The wearable system may be way of example be a harness of a backback, a safety harness, a vest or a suit. The wearable system may comprise airbags configured to protect different body parts. Alternatively, the wearable system may comprise airbags configured to protect either the left side or the right side of the body.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The invention will be described in more detail with reference to the appended schematic drawings, which show examples of a presently preferred embodiment of the invention.
Fig. 1 is a cross sectional view of a first embodiment of an inflator arrangement according to the invention when set to its default position.
Fig. 2 is a perspective view of the first embodiment of the inflator arrangement.
Fig. 3 is a cross sectional view of the first embodiment of the inflator arrangement when set to its alternative position.
Fig. 4 is a cross sectional view of a second embodiment of an inflator arrangement according to the invention when set to its default position.
Fig. 5 is a perspective view of the second embodiment of the inflator arrangement.
Fig. 6 is a cross sectional view of the second embodiment of the inflator arrangement with a first example where the two valve arrangements are set in different positions.
Fig. 7 is a cross sectional view of the second embodiment of the inflator arrangement with a second example where the two valve arrangements are set in different positions.
Fig. 8 is a cross sectional view of a third embodiment of an inflator arrangement according to the invention when set to its default position.
Fig. 9 is a perspective view of the tube forming part of the inflator arrangement according to the third embodiment.
Fig. 10 is a cross sectional view of a third embodiment of an inflator arrangement according to the invention when set to its alternative position.
Fig. 11 is a perspective view of the third embodiment of the inflator arrangement disclosing the connector interface of the gas actuator.
Fig. 12 is a perspective view of the third embodiment of the inflator arrangement disclosing the connector interface of the piston actuator.
Fig. 13 is a highly schematic illustration of one example of how airbags may be connected to the inflator arrangement.
Fig. 14 discloses one example of a safety system using the inflator arrangement.
Fig. 15 discloses one embodiment of the ECU.
Fig. 16 is a flowchart disclosing a method of sensing abnormal movement by using a system according to the invention.

### Detailed description

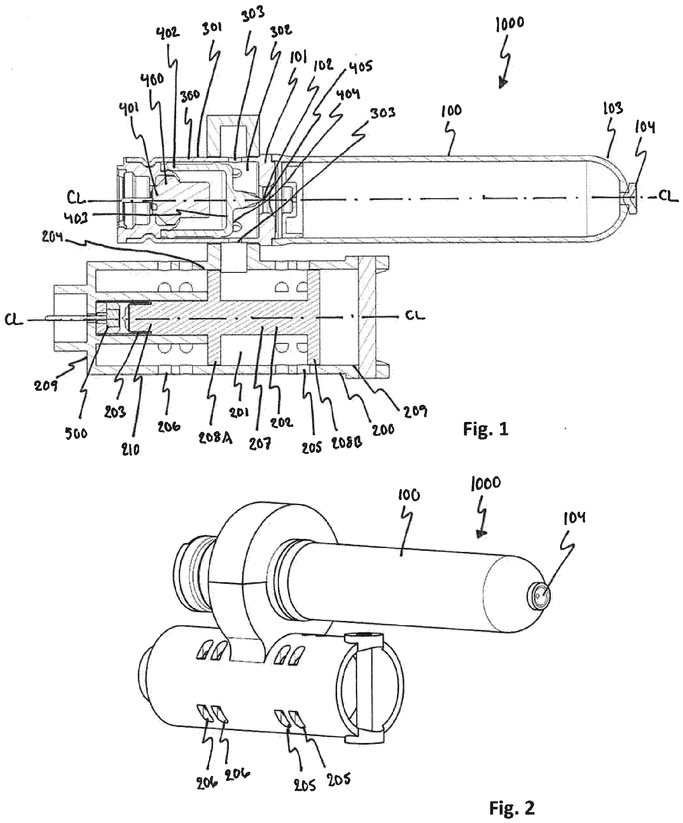

Starting with Figs. 1 and 2, a first embodiment of an inflator arrangement 1000 of the invention is disclosed. The inflator arrangement 1000 is disclosed in its default position. The inflator arrangement 1000 is configured to be connected to two airbags. The airbags are omitted.

The inflator arrangement 1000 comprises a gas canister 100 that holds a volume of pressurized gas. The gas canister 100 is connected to a valve arrangement 200 via a gas distributing housing 300. The gas canister 100, constituting a pressure vessel, is disclosed as having a generally tubular form. It is to be understood that other shapes are possible. The gas canister 100 has a first end 101 that is sealed by a membrane 102. Further, the gas canister 100 has a second end 103, comprising a filling nozzle 104. The skilled person realises that the gas canister 100 as such may be designed in a number of ways with remained function.

The first end 101 of the gas canister 100 is connected to the gas distributing housing 300. The gas distributing housing 300 is linearly aligned with a longitudinal centerline CL of the gas canister 100.

The gas distributing housing 300 comprises a tubular envelope wall 301 that defines an inner cavity 302. The housing 300 supports a gas actuator 400 in an end opposite the membrane 102. The gas actuator 400 is at least partly arranged in the gas distributing housing 300. The gas actuator 400 is linearly aligned with the longitudinal centerline CL of the gas canister 100.

The tubular envelope wall 301 of the gas distributing housing 300 has a plurality of throughgoing openings 303. The openings allow the inner cavity 302 to communicate with a valve chamber 201 of the valve arrangement 200. The throughgoing openings 303 are distributed along the circumference of the gas distributing housing 300. Gas that is released from the gas canister 100 is thereby allowed to be guided into the valve chamber 201. The throughgoing openings 303 allow the gas to be guided into the valve chamber 201 in a direction substantially transverse to the longitudinal extension of the gas distributing housing 300. The skilled person realises that it is sufficient with one opening only. The at least one throughgoing opening 303 may be one or more substantially circular holes, or one or more elongated grooves being formed in an envelope wall portion of the gas distributing housing 300.

The gas actuator 400 may be a pyrotechnically or electrically activated actuator. Pyrotechnically or electrically activated actuators are as such well known in the field of inflators for safety applications. Hence, no further explanations are provided.

The gas actuator 400 comprises a gas generator 401 and a slider 402.

The gas generator 400 is stationary arranged in the gas distributing housing 300 and faces a trailing end 403 of the slider 402. The slider 402 is movable supported by the tubular envelope wall 301 of the gas distributing housing 300. A leading end 404 of the slider 402 comprises a cutter 405. The cutter 405 is configured to break the membrane 102. Thereby, gas that is generated by the gas generator upon an activation thereof will fill the inner cavity 302 in the gas distributing housing 300 between the gas generator 400 and the trailing end 403 of the slider 402 and force the slider 402 in a direction towards the membrane 102. As the leading end 404 of the slider 402 comes into contact with the membrane 102, the cutter 405 will break the membrane 102 and allow the gas that is contained in the gas canister 100 to be released through the resulting cut opening in the membrane 102. The thus released gas will be guided via the gas distributing housing 300 into the valve chamber 201. The valve chamber will be further described below.

As given above, the valve chamber 201 of the valve arrangement 200 is communicatively connected to the gas distributing housing 300. The valve chamber 201 contains a piston 202 that is movably received in said valve chamber 201. Further, the valve arrangement comprises a piston actuator 500.

The valve chamber 201 has in the disclosed embodiment a tubular shape having a longitudinal extension in parallel with a longitudinal centreline CL of the gas canister 100. The piston 202 is thereby configured to be movably received in said valve chamber 201 along and in parallel with the longitudinal centreline CL of the gas canister 100.

An envelope wall 204 that defines the valve chamber 201 comprises an inlet 240 that allows a fluid communication between the gas distributing housing 300 and the valve chamber of the valve arrangement 200. Further, the envelope wall 204 comprises a first outlet 205 and a second outlet 206 that allow the gas that is received from the gas canister 100 via the inlet 240 to be released from the valve arrangement 200. The second outlet 206 is arranged in end of the valve chamber 201 that is adjacent the piston actuator 500. Accordingly, the first outlet 205 is arranged in the opposite end of the valve chamber 201.

The valve chamber 201 is disclosed as comprising a plurality of first and second outlet openings 205, 206. The openings are distributed in the circumferential direction. A plurality of outlets 205, 206 allows a faster filling of an airbag to be connected to the first and second outlets respectively.

The piston 202 has a longitudinal extension in parallel with the longitudinal centreline CL of the gas canister 100 and hence with the longitudinal extension of the valve chamber 201. The piston 202 is disclosed as having a shaft 207 and two radially extending discs 208A; 208B. The discs slidingly abut an inner envelope wall 209 of the valve chamber 201. The two discs 208A; 208B are axially displaced in view of each other. The piston 202 has a stroke length so that the first disc 208A is arranged on a first side of the inlet 240 in a condition when the piston 202 is set to its default position and on a diametrically opposing second side of the inlet 240 when the piston 202 is set to its alternative position.

Further, the first disc 208A is arranged so that it is arranged in a position between the first and second outlets 205; 206. Accordingly, the gas will be released via the first outlet 205 when the piston 202 is set to its default position and from the second outlet 206 when the piston 202 is set to its alternative position. The first disc 208A is arranged to allow the gas to pass to either the first or the second outlet 205, 206. The second disc 208B may be seen as a slider that facilitates a linear movement of the piston 202 inside the valve chamber 201.

The piston actuator 500 may be a pyrotechnically or electrically activated actuator. The gas actuator 400 and the piston actuator 500 may be of the same type or be of different types. Pyrotechnically or electrically activated actuators are as such well known in the field of inflators for safety applications. Hence, no further explanations are provided.

The piston actuator 500 is disclosed as being received in a tubular member 203 that extends coaxially with the longitudinal centerline CL of the valve chamber 201 and that extends from one end wall 209 of the valve chamber 201. The piston actuator 500 is thereby axially aligned with the piston 202. The tubular member 203 further receives one free end 210 of the piston 202. As the piston actuator 500 is activated, gas is generated and fills an interspace 211 in the tubular member 203 between the piston actuator 500 and the free end 210 of the piston 202. The hence build-up pressure will force the piston 202 to move from its default position to its alternative position.

The piston actuator 500 is configured to selectively move the piston 202 from a default position to an alternative position by activating the piston actuator 500.

In the following the mechanical operation of an inflator arrangement 1000 according to the first embodiment will be disclosed.

Starting with Fig. 1, the inflator arrangement 1000 is disclosed as being set to its default position. In this default position, the piston 202 is set to the position where a communication is allowed between the gas distributing housing 300 and the first outlet 205 of the valve chamber 201 via the inlet 240 to the valve chamber 201.

When activating the gas actuator 400, the membrane 102 of the gas canister 100 will be caused to break. The pressurised gas contained in the gas canister 100 will enter the gas distributing housing 300 and leave the same via the at least one opening 303 and enter the valve chamber 201 via the inlet 240. Since the piston 202 is set to it default position, the gas that is received into the valve chamber 201 is allowed to be released from the valve arrangement 200 via the first outlet 205 of the valve chamber 201. An airbag (not disclosed) that may be connected to the first outlet will hence be inflated.

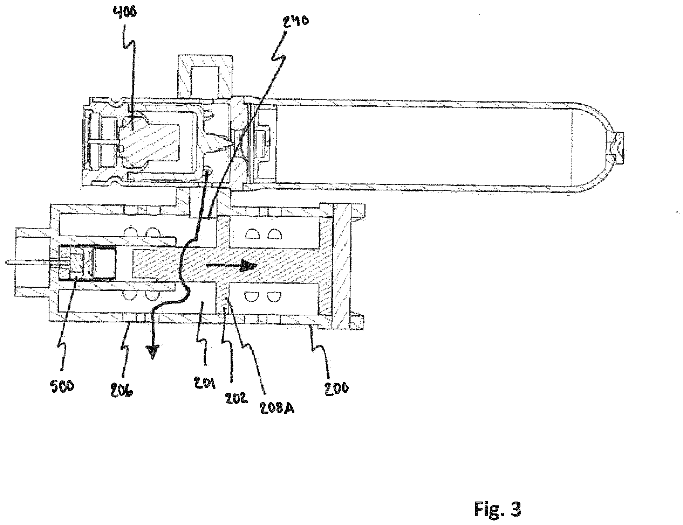

Now turning to Fig. 3. If instead a second airbag (not disclosed) that may be connected to the second outlet 206 should be inflated, the piston actuator 500 must be actuated. This should be made preferably before or simultaneously with the actuation of the gas actuator 400. By activating the piston actuator 500, the piston 202 will move to its alternative position, see Fig. 3. When the piston 202 is set to its alternative position, the gas that is received into the valve chamber 201 is allowed to be released from the valve arrangement 200 via the second outlet 206 of the valve chamber 201. An airbag that may be connected to the second outlet 206 will hence be inflated. The airflow is illustrated by the arrow.

As is clearly seen in Figs. 1 and 3, when the piston 202 is moved from the default position to the alternative position, the first disc 208A is linearly displaced a distance that allows it to be moved from one end of the inlet 240 to diametrically opposing opposite end of the inlet 240.

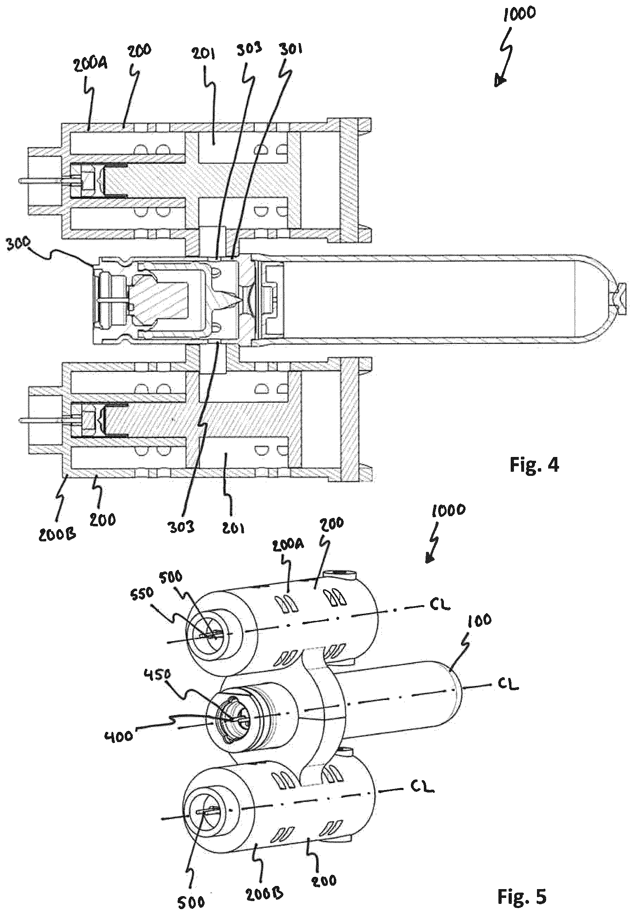

Now turning to Figs. 4 and 5, a second embodiment of the inflator arrangement 1000 is disclosed. The second embodiment has the overall same design as the first embodiment. The main difference is that the gas distributing housing 300 is connected to two valve arrangements 200. The use of two valve arrangements 200 allows the use of up to four airbags to be served by one single gas canister 100. Two airbags may be connected to each valve arrangement 200. Two airbags may be inflated at a time, and one in each valve arrangement.

The gas distributing housing 300 and the valve arrangements 200 have the very same design as previously described above with reference to Figs. 1-3. Hence, to avoid undue repetition, reference is made to the previous description.

As is best seen in Fig. 5, which discloses a perspective view of the inflator arrangement 1000 as seen from the gas actuator 400, the two valve arrangements 200 are circumferentially distributed about the longitudinal centreline CL of the gas canister 100. Further, each valve arrangement 200 has a longitudinal extension in parallel with the longitudinal centreline CL of the gas canister 100. The two valve arrangements 200 are arranged so that the longitudinal centrelines CL of the respective valve arrangements 200 are arranged in a common plane. Further, the two valve arrangements 200 are arranged so that the longitudinal centrelines CL of the respective valve arrangements 200 and the longitudinal centerline CL of the gas canister 100 are arranged in a common plane. This allows the provision of a substantially flat, and hence less spacy, over-all structure of the inflator arrangement 1000. This is of special interest when the inflator arrangement 1000 is configured to be part of a wearable safety system.

As can be seen in this view, each actuator, no matter if it is the gas actuator 400 or the two piston actuators 500 comprises its own pair of contact pins 450; 550 for connection of the inflator arrangement 1000 to an operation system.

As is best seen in Fig. 4 being a schematic cross section, the two valve arrangements 200 are arranged in fluid communication with a respective throughgoing opening 303 in the tubular envelope wall 301 of the gas distributing housing 300. Thereby gas is allowed to be released from the gas canister 100 and be guided into the valve chambers 201 of the two valve arrangements 200. By providing two valve arrangements 200, up to four airbags (two at a time) may be selectively inflated by the use of one single gas canister 100. One of the two valve arrangements 200A may be arranged to inflate one airbag in a first set of two airbags, and the other of the two valve arrangements 200B may be arranged to inflate one airbag in a first set of two airbags. The airbags are omitted in Figs 4 and 5.

The piston actuators 500 in the two valve arrangements 200 may be configured to be deployed simultaneously or independent from each other.

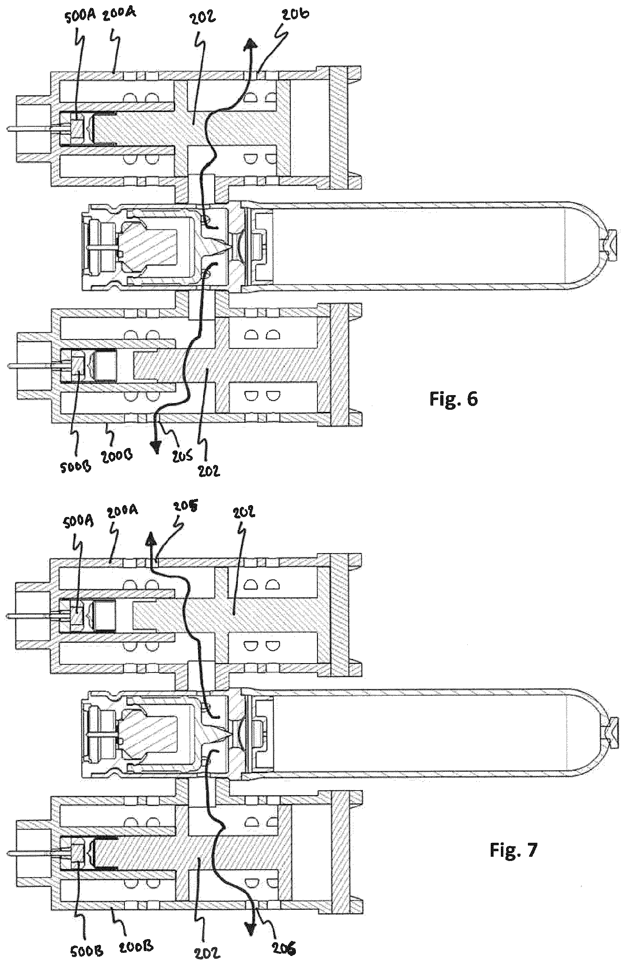

Fig. 6 discloses one example where the piston actuator 500B in the second valve arrangements 200B has been actuated. Hence, the piston 202 in the second valve arrangement 200B has been set to its alternative position. The piston actuator 500A in the first valve arrangement is not actuated whereby the piston 202 in the first valve arrangement 200A is in its default position. The airflows are illustrated by arrows. This allows a simultaneous inflation of an airbag (not illustrated) connected to the second outlet 206 of the first valve arrangement 200A and an airbag (not illustrated) connected to the first outlet 205 of the second valve arrangement 200B.

Fig. 7 discloses one example where the piston actuator 500A in the first valve arrangement 200A has been actuated while the piston actuator 500B in the second valve arrangement 200B has not been actuated. Hence, the piston 202 in the first valve arrangement 200A is set to its alternative position whereas the piston 202 in the second valve arrangement 200B is remained in its default position. The airflows are illustrated by arrows. This allows a simultaneous inflation of an airbag (not illustrated) connected to the first outlet 205 of the first valve arrangement 200A and an airbag (not illustrated) connected to the second outlet 206 of the second valve arrangement 200B.

The skilled person realises that the piston actuators 500A and 500B in the first and second valve arrangements 200A, 200B may be actuated simultaneously. Further, the skilled person realises that the principle of the second embodiment 1000 is equally applicable to an inflator arrangement that comprises more than two valve arrangements.

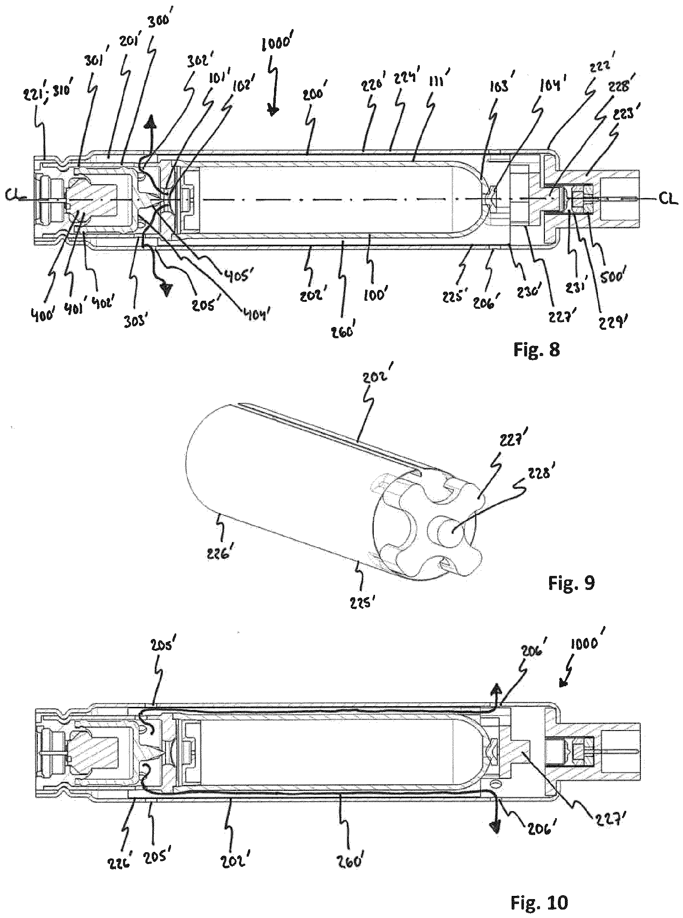

Now turning to Fig. 8, a third embodiment of the inflator arrangement 1000' is disclosed. The third embodiment differs from the first embodiment in the design and position of the valve arrangement.

The inflator arrangement 1000' comprises a gas canister 100' that holds a volume of pressurized gas. The gas canister 100' is connected to a valve arrangement 200' via a gas distributing housing 300'. The gas canister 100', constituting a pressure vessel, is disclosed as having a generally tubular form. It is to be understood that other shapes are possible. The gas canister 100' has a first end 101' that is sealed by a membrane 102'. Further, the gas canister 100' has a second end 103', comprising a filling nozzle 104'. The skilled person realises that the gas canister 100' as such may be designed in a number of ways with remained function.

The first end 101' of the gas canister 100' is connected to the gas distributing housing 300'. The gas distributing housing 300' is linearly aligned with the longitudinal centerline CL of the gas canister 100'. The gas distributing housing 300' comprises a tubular envelope wall 301' that defines an inner cavity 302'. The gas distributing housing 300' supports a gas actuator 400' that is arranged in an end opposite the membrane 102'. The gas actuator 400' is at least partly arranged in the gas distributing housing 300'. The gas actuator 400' is linearly aligned with the longitudinal centerline CL of the gas canister 100'.

The tubular envelope wall 301' of the gas distributing housing 300' has a plurality of throughgoing openings 303' that allow the inner cavity 302' to communicate with a valve chamber 201' of the valve arrangement 200'. The valve chamber 201' will be further described below. The throughgoing openings 302' are distributed along the circumference of the gas distributing housing 300'. Gas that is released from the gas canister 100' is thereby allowed to be guided into the valve chamber 201'. The throughgoing openings 303' allow the gas to be guided into the valve chamber 201' in a direction substantially transverse to the longitudinal centerline CL and hence transverse the longitudinal extension of the gas distributing housing 300'. The skilled person realises that it is sufficient with one opening 303' only. The at least one throughgoing opening 303' may be one or more substantially circular holes or one or more elongated grooves being formed in an envelope wall portion of the gas distributing housing 300'.

The gas actuator 400' may be a pyrotechnically or electrically activated actuator. Pyrotechnically or electrically activated actuators are as such well known in the field of inflators for safety applications. Hence, no further explanations are provided.

The gas actuator 400' comprises a gas generator 401' and a slider 402'. The gas generator 400' is stationary arranged in the gas distributing housing 300' and faces a trailing end 403' of the slider 402'. The slider 402' is movable supported by the tubular envelope wall 301' of the gas distributing housing 300'. A leading end 404' of the slider 402' comprises a cutter 405'.

Gas that is generated by the gas generator upon an activation thereof will fill the inner cavity 302' that is formed in the gas distributing housing 300' between the gas generator 400' and the trailing end 403' of the slider 402'. The inherent pressure in the generated gas will force the leading end 404' of the slider 402' into contact with the membrane 102', whereby the cutter 405' will break the membrane 102'. The gas that is contained in the gas canister 100' will be released through the resulting cut opening in the membrane 102'. The thus released gas will be guided via the gas distributing housing 300' into the valve chamber 201' that will be further described below.

As a difference to the first embodiment, the valve arrangement 200' is arranged coaxially with the gas canister 100' and the gas distributing housing 300'. The valve arrangement 200' comprises a housing 220' that encircles the gas canister 100' and the gas distributing housing 300'. The housing 220' forms a fluid tight unit.

The housing 220' has a first end 221' that sealingly engages an outer envelope wall 310' of the gas distributing housing 300'. Further, the housing 220' has a second end 222' that extends past a free end of the gas canister 100'. The second end 222' of the housing 220' is closed-off by a closing element 223'. The valve chamber 201' is formed in the interface between an outer envelope wall 111' of the gas canister 100' and an inner envelope wall 224' of the housing 220'. The valve chamber 201' has a longitudinal extension extending coaxially with and outside the gas canister 100'.

The closing element 223' supports a piston actuator 500'. The gas actuator 400' and the piston actuator 500' are thereby arranged in opposite ends of the valve arrangement 200'. The gas actuator 400' and the piston actuator 500' are oriented so that they, upon an activation, are configured to generate a respective actuating force having opposite directions. This applies no matter if the actuating force is generated by a pyrotechnically or by an electrically activated actuator 400', 500'.

The gas actuator 400' and the piston actuator 500' may be of the same type or be of different types. Pyrotechnically or electrically activated actuators are as such well known in the field of inflators for safety applications. Hence, no further explanations are provided.

The housing 220' comprises a first outlet 205' in the end adjacent the gas actuator 400', and a second outlet 206' in the opposite end, adjacent the piston actuator 500'. The second outlet 205' may be arranged substantially radially opposing one of the at least one throughgoing openings 302' in the gas distributing housing 300'.

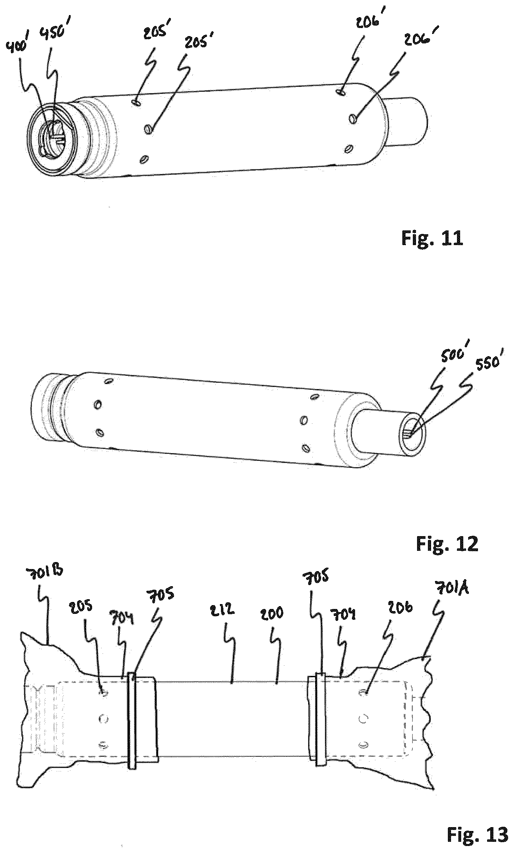

The valve chamber 201' is disclosed as comprising a plurality of first and second outlet openings 205', 206' that are distributed in the circumferential direction. A plurality of outlets 205, 206 allows a faster filling of an airbag to be connected to the first and second outlets respectively. This is best seen in Figs. 11 and 12.

The valve arrangement 200' comprises a tubular piston 202'. One embodiment of the piston 202' as a stand-alone unit is disclosed in Fig. 9. The piston 202' is movably received in the valve chamber 201' in an interface between the outer envelope wall 111' of the gas canister 100' and the inner envelope wall 224' of the housing 220'. The piston 202' is coaxially movable along the longitudinal extension of the gas canister 100'.

The outer envelope wall of the piston 202' fits snuggly with the inner envelope wall of the valve chamber 201'. A longitudinally extending passage 260' is formed in the interface between the outer envelope wall of the gas canister 100' and the outer envelope wall of the piston 202'. The passage 260' allows the gas that is generated by the gas generator 401' to travel along the longitudinal extension of the passage 206' from one end of the valve arrangement 200' to the other.

The piston 202' is formed as a thin-walled tube that comprises a first wall portion 225' and a second wall portion 226'. The first wall portion 225' is configured to close-off the second outlet 206' of the valve chamber 201' in a condition when the piston 202' is set to its default position. This is best seen in Fig. 8. Correspondingly, the second wall portion 226' is configured to close-off the first outlet 205' of the valve chamber 201' in a condition when the piston 202' is set to its alternative position. This is best seen in Fig. 10.

The valve arrangement 200' further comprises a driver 227', see Figs 8-10. One end of the driver 227' comprises an axial protrusion 228' that coincides with the longitudinal centerline CL of the gas canister 100'. The protrusion 228' is received in a corresponding axial recess 229' in the closing element 223'. The protrusion 228' together with the axially extending recess 229' and a free end 230' of the piston actuator 500' defines a void 231'. The opposite end of the driver 227' is arranged in contact with the end of the piston 202'.

In the following the mechanical operation of an inflator arrangement 1000' according to the third embodiment will be disclosed.

Starting with Fig. 8, the inflator arrangement 1000' is disclosed as being set to its default position. In this default position, the piston 202' is set to the position where a communication is allowed between the gas distributing housing 300' and the first outlet 205' of the valve chamber 201' via the inlet 240' to the valve chamber 201'.

When the gas actuator 400' is actuated, gas will be generated by the gas generator. The gas will fill the inner cavity 302' that is formed in the gas distributing housing 300' between the gas generator 400' and the trailing end 403' of the slider 402'. The inherent pressure in the gas will force the slider 402' in a direction towards the membrane 102'. As the leading end 404' of the slider 402' comes into contact with the membrane 102', the cutter 405' will break the membrane 102' and allow the gas that is contained in the gas canister 100' to be released through the resulting cut opening in the membrane 102'. The thus released gas will be guided via the gas distributing housing 300' into the valve chamber 201'. Since the piston 202' is set to it default position, the gas that is received into the valve chamber 201' will be released from the valve arrangement 200' via the first outlets 205' of the valve chamber 201'. The gas flow is disclosed by an arrow. This means that an airbag (not disclosed) that is connected to the first outlet 205' will be inflated.

If it instead is the purpose that a second airbag should be inflated, the piston actuator 500' must be actuated to thereby set the piston 202' to its alternative position, see Fig. 10. This setting should be made preferably before or simultaneously with the actuation of the gas actuator 400'. When activating the piston actuator 500, gas will be generated by its gas generator. The generated gas will fill the void 231' between the free end 230' of the piston actuator 500' and the protrusion 228' of the driver 227'. The build-up pressure will force the driver 227' and the piston 202' to be displaced in a direction towards the gas actuator 400. During this displacement, the second outlet 206' will be opened-up while the first outlet 205' will be closed-off by the first wall portion of the piston 202'. This means that the gas that is received into the valve chamber 201' instead will be released from the valve arrangement 200' via the second outlet 206' of the valve chamber 201'. The gas flow is illustrated by arrows. Thereby, an airbag (not disclosed) that is connected to the second outlet 206' will be inflated.

Fig. 11 discloses a perspective view of the inflator arrangement 1000' of the third embodiment as seen from the gas actuator 400'. Fig. 12 discloses a perspective view of the inflator arrangement 1000' of the third embodiment as seen from the piston actuator 500'. As can be seen in these two views, the actuators 400', 500' comprise a respective pair of contact pins 450'; 550' for connection of the inflator arrangement 1000' to an operation system.

Now turning to Fig. 13, one example is disclosed of how a first and a second airbag 701A, 701B can be connected to a respective end of a valve arrangement. The airbags 701A, 701B are disclosed highly schematically. Each airbag 701A, 701B comprises a neck portion 704 that encircles the outer envelope wall 212 of the valve arrangement 200. The first and second outlets 205, 206 will thereby be arranged inside a respective airbag 701A, 701B. The neck portion 704 is held in position by means of a clamp 705. The clamp 705 forms a gas-tight connection between the neck portion 704 and the outer envelope wall 212. This principle is applicable to all embodiments of the inflator arrangements 1000, 1000' in the present application. Any wiring that is required to operate the gas actuators may be arranged to extend along the interface between the neck portion 704 and the outer envelope wall 212.

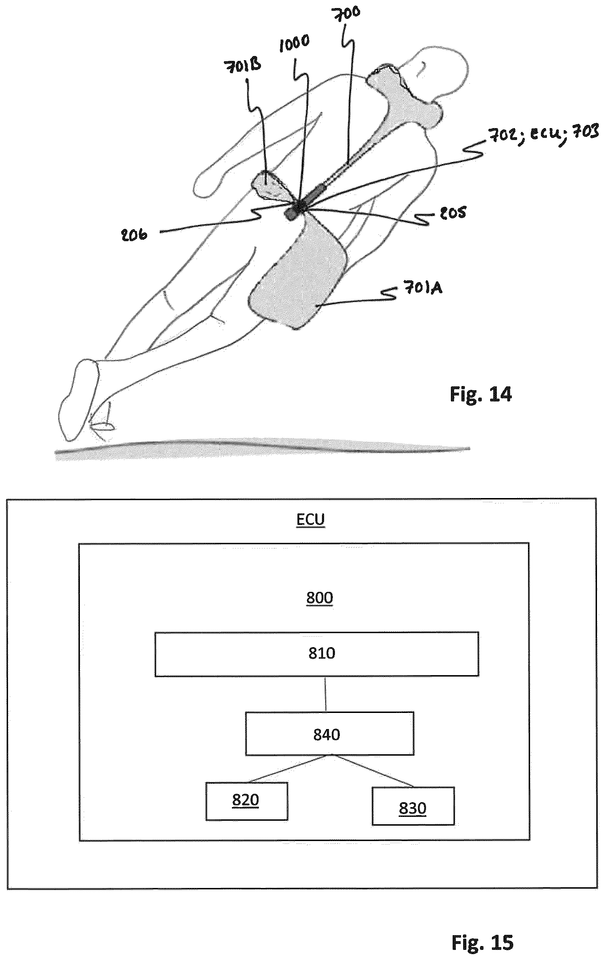

Now turning to Fig. 14, the operation of a system for a wearable safety arrangement using an inflator arrangement according to the invention is schematically disclosed. The system is schematically disclosed as comprising an inflator arrangement 1000 according to the first embodiment with a single valve arrangement that is connected to first and a second airbag. The principle is equally applicable to the second and third embodiments.

The safety arrangement is a harness 700 to be worn on the torso of a wearer, where two airbags 701A, 701B are configured to allow a selective protection of the wearers hips. The first airbags 701A is configured to allow, when inflated and deployed, a protection to the right-hand side hip. The second airbags 701B is configured to allow, when inflated and deployed, a protection to the left-hand side hip.

As a part of the system, the harness 700 supports, not only said inflator arrangement 1000' and the airbags 701A, 701B, a detector 702 and an ECU (Electrical Control Unit).

The detector 702 is configured to sense an abnormal movement of the wearers body and to generate movement data. The detector 702 may be an accelerometer and/or a gyroscope. The skilled person realises that also other types of detectors may be used, alone or in combination. Hence, the system comprises at least one detector 702.

The ECU is configured to communicate with the detector 702. The communication may be a wired communication or a wireless communication. The purpose of the communication is to determine if the movement data represents a first type accident or a second type accident. *A "first type accident"* is to be understood as an accident that may be remedied by an inflation of the first airbag 701A. Correspondingly, a *"second type accident"* is to be understood as an accident that may be remedied by an inflation of the second airbag 701B. As a non-limiting example, a first type accident may by way of example be that it is determined that the wearer's body is suddenly and abnormally falling to the right, whereby the first airbag 701A is to be inflated and deployed to extend across the right hip of the wearer and hence protect the right-hand side of the wearer's body. Correspondingly, a second type accident may by way of example be that it is determined that the wearer's body is suddenly and abnormally falling to the left, whereby the second airbag 701B is to be inflated and deployed to extend across the left hip of the wearer, and hence protect the left-hand side of the wearers body. The two airbags 701A, 701B are preferably contained in a rolled and/or folded condition in the harness 700.

The first airbag 701A is connected directly, or indirectly to the first outlets 205 of the valve chamber 201. The second airbag 701A is correspondingly connected directly, or indirectly to the second outlet 206 of the valve chamber 201. A *"direct connection"* is to be understood as that the inlet of an airbag is directly connected to the outlet 205; 206 of the valve chamber 201. This is exemplified in Fig. 13. An *"indirect connection"* is to be understood as the provision of a gas transfer arrangement, e.g. a hose or the like, that is connected between the outlet 205; 206 of the valve chamber 201 and an inlet of the airbag. Hence, an indirect connection allows the inflator arrangement 1000' to be arranged remote from the airbags.

The gas actuator and the piston actuator are connected to a battery 703 that is contained in the harness. The connection is made via a suitable wiring that connects to the connecting pins 450, 550 of the gas actuator 400 and the piston actuator 500 respectively.

Now turning to Fig. 15, one example of the overall design of an ECU according to the invention is disclosed. The ECU comprises a circuitry 800. The circuitry 800 may comprise one or more of a memory 810, a processing unit 820, a transceiver 830, and a data bus 840. The processing unit 820 may comprise a central processing unit (CPU) and/or a graphical processing unit (GPU). The transceiver 830 may be configured to communicate with external devices such as one or more of the detectors 702 and the gas actuator 400 and the piston actuator 500.

The detectors 702 may be configured to communicate with the circuitry 800 via the data bus 840 and/or the transceiver 830. One or more of the memory 810, the processing unit 820 and the transceiver 830 may communicate via the data bus 840. The memory 810 may be a non-transitory computer-readable storage medium. The memory 810 may be a random-access memory. The memory 810 may be a non-volatile memory. The memory 810 may store program code portions corresponding to one or more functions. The functions may by way of example be to evaluate the movement data to determine if the movement data represents a first type accident, a second type accident, or an ordinary movement.

The program code portions may be executable by the processing unit 820, which thereby performs the functions. It is to be understood that one or more functions of the circuitry 800 may be hardware implemented and/or implemented in a specific integrated circuit. For example, one or more functions may be implemented using field-programmable gate arrays (FPGAs). Put differently, one or more functions of the circuitry 800 may be implemented in hardware or software, or as a combination of the two.

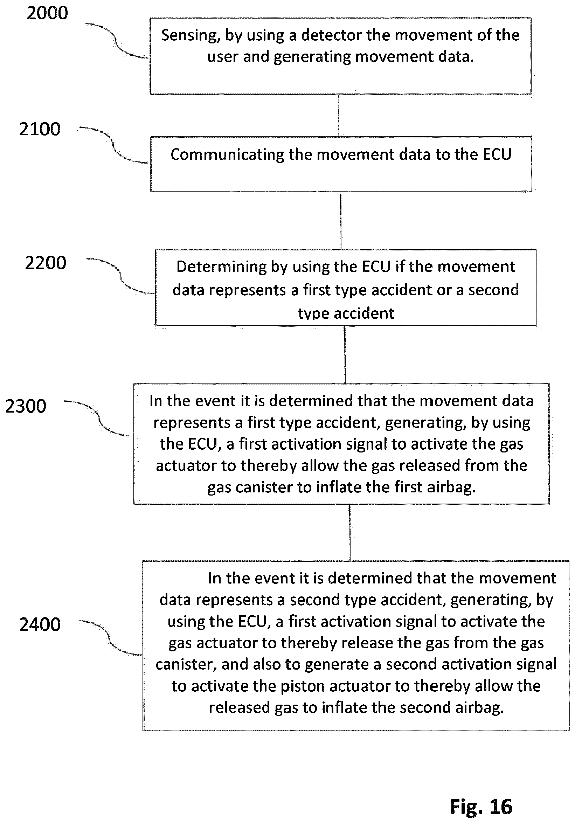

Now turning to Fig. 16, a flow chart is provided that illustrates one embodiment of a method of sensing abnormal movement by using a system for a wearable safety arrangement, which comprises an inflator arrangement 1000; 1000' of the type described above.

The method comprises the following steps:

Sensing 2000, by using a detector 702, the movement of the user and generating movement data.

Communicating 2100 the movement data to the ECU.

Determining 2200 by using the ECU if the movement data represents a first type accident or a second type accident.

In the event it is determined that the movement data represents a first type accident, generating 2300, by using the ECU, a first activation signal to activate the gas actuator 400; 400' to thereby allow the gas released from the gas canister 100; 100' to inflate the first airbag 701A.

In the event it is determined that the movement data represents a second type accident, generating 2400, by using the ECU, a first activation signal to activate the gas actuator 400; 400' to thereby release the gas from the gas canister 100; 100', and also to generate a second activation signal to activate the piston actuator 500; 500' to thereby allow the released gas to inflate the second airbag 701B.

In the event that the ECU determines that the movement data represents a second type accident, the ECU may be configured to generate the first and second activation signals in a sequence so that the piston 202; 202' is moved to the alternative position simultaneously with or before the gas actuator 400; 400' is activated to break the membrane 102; 102', whereby the released gas will inflate the second airbag 701B.

The steps of the method may be performed in any order suitable.

The person skilled in the art realizes that the present invention by no means is limited to the preferred embodiments described above. On the contrary, many modifications and variations are possible within the scope of the appended claims.

The wearable system has for facilitated understanding been exemplified as a harness configured to provide a hip protection. Other applications are equally possible. The wearable system may be way of example be a harness of a backpack, a safety harness, a vest or a suit. The wearable system may comprise airbags configured to protect different body parts. Alternatively, the wearable system may comprise airbags configured to protect either the left side or the right side of the body.

Additionally, variations to the disclosed embodiments can be understood and effected by the skilled person in practicing the claimed invention, from a study of the drawings, the disclosure and the appended claims.

## Claims

1. An inflator arrangement for selective inflation of two or more airbags, the inflator arrangement comprising:
a gas canister (100; 100') holding a volume of pressurized gas, the gas canister having a first end being sealed by a membrane (102; 102');
a gas actuator (400; 400') configured to break the membrane (102; 102') to thereby release the gas from the gas canister (100; 100'); and
a valve arrangement (200; 200') comprising a valve chamber (201; 201') configured to receive the gas released from the gas canister (100; 100'), a piston (202; 202') being movably received in said valve chamber (201; 201'), and a piston actuator (500; 500'); wherein
the piston actuator (500; 500') is configured to selectively move the piston (202; 202') from a default position allowing the received gas to be released from the valve arrangement (200; 200') via a first outlet (205; 205') of the valve chamber (201; 201'), to an alternative position allowing the received gas to be released from the valve arrangement (200; 200') via a second outlet (206; 206') of the valve chamber (201; 201').

2. The inflator arrangement according to claim 1, wherein the first outlet (205; 205') of the valve chamber (201; 201') is configured to be directly or indirectly connected to a first airbag (701A), and wherein the second outlet (206; 206') of the valve chamber (201; 201') is configured to be directly or indirectly connected to a second airbag (701B).

3. The inflator arrangement according to claim 1 or 2, wherein the first end of the gas canister (100; 100') is connected to a gas distributing housing (300; 300'), said gas distributing housing comprising a tubular envelope wall comprising at least one throughgoing opening (303; 303') communicating with the valve chamber (201; 201') of the valve arrangement (200; 200'), thereby allowing gas released from the gas canister (100; 101) to be guided into the valve chamber (201; 201').

4. The inflator arrangement according to claim 3, wherein the gas actuator (400; 400') is at least partly arranged in the gas distributing housing (300; 300'), said gas actuator (400; 400') comprising a gas generator (401; 401') and a slider (402; 402'), the slider being movable supported by the tubular envelope wall of the gas distributing housing (300; 300'), and wherein a leading end (404; 404') of the slider (402; 402') comprises a cutter (405; 405') configured to break the membrane (102; 102').

5. The inflator arrangement according to any of the preceding claims, wherein the gas actuator (400; 400') and/or the piston actuator (500; 500B) is a pyrotechnically or electrically activated actuator.

6. The inflator arrangement according to any of the preceding claims, wherein the valve chamber (201) has a longitudinal extension in parallel with a longitudinal centerline of the gas canister (100).

7. The inflator arrangement according to any of claims 1-6, comprising at least two valve arrangements (200), said at least two valve arrangements being circumferentially distributed about a longitudinal centerline of the gas canister (100), and each valve chamber (201) having a longitudinal extension in parallel with a longitudinal centerline of the gas canister (100).

8. The inflator arrangement according to any of claims 1-5, wherein the valve chamber (201) has a longitudinal extension extending coaxially with and outside the gas canister (100).

9. The inflator arrangement according to claim 8, wherein the gas actuator (400') is arranged in one end portion of the inflator arrangement (1000') and the piston actuator (500') is arranged in a second end portion of the inflator arrangement (1000') opposite the first end portion.

10. The inflator arrangement according to any of claims 8-9, wherein the piston (202') is movably received in said valve chamber (201') in an interface between an outer envelope wall of the gas canister (100') and an inner envelope wall of the valve chamber (201').

11. The inflator arrangement according to any of claims 8-10, wherein the piston (202; 202') is configured to be moved by a driver as the piston actuator (500') is activated.

12. A system for a wearable safety arrangement, the system comprising an inflator arrangement (1000; 1000') according to any of claims 1-11, wherein the first outlet (205; 205') of the valve chamber (201; 201') is connected to a first airbag (701A) and the second outlet (206; 206') of the valve chamber (201; 201') is connected to a second airbag (701B), the system further comprising:
a detector (702) configured to sense an abnormal movement of a user of the system and to generate movement data; and
an ECU configured to communicate with the detector (702) to determine if the movement data represents a first type accident or a second type accident; and
wherein, in the event it is determined that the movement data represents a first type accident, the ECU is configured to generate a first activation signal to activate the gas actuator (400; 400') to thereby allow the gas released from the gas canister (100; 100') to inflate the first airbag (701A); and
in the event it is determined that the movement data represents a second type accident, the ECU is configured to generate a first activation signal to activate the gas actuator (400; 400') to thereby release the gas from the gas canister (100; 100'), and also to generate a second activation signal to activate the piston actuator (500; 500') to thereby allow the released gas to inflate the second airbag (701B).

13. The system of claim 12, wherein the ECU is configured to, in the event that the ECU determines that the movement data represents a second type accident, generate the first and second activation signals in a sequence so that the piston (202; 202') is moved to the alternative position simultaneously with or before the gas actuator (400; 400') is activated to break the membrane (102; 102'), whereby the released gas will inflate the second airbag (701B).

14. A method of sensing abnormal movement by using a system for wearable safety arrangement which comprises an inflator arrangement (1000; 1000') according to any of claims 1-11, the method comprising the steps of:
sensing (2000), by using a detector (702) the movement of the user and generating movement data;
communicating (2100) the movement data to the ECU;.
determining (2200) by using the ECU if the movement data represents a first type accident or a second type accident; and
in the event it is determined that the movement data represents a first type accident, generating (2300), by using the ECU, a first activation signal to activate the gas actuator (400; 400') to thereby allow the gas released from the gas canister (100; 100') to inflate the first airbag (701A); and
in the event it is determined that the movement data represents a second type accident, generating (2400), by using the ECU, a first activation signal to activate the gas actuator (400; 400') to thereby release the gas from the gas canister (100; 100'), and also to generate a second activation signal to activate the piston actuator (500; 500') to thereby allow the released gas to inflate the second airbag (701B).

15. Use of the inflator arrangement according to any of claims 1-11 in a wearable safety system.
